# EUROPÄISCHE PATENTANMELDUNG

(11) **EP 0 949 373 A1**
(43) Veröffentlichungstag der Anmeldung: **13.10.1999**
(21) Anmeldenummer: 98104207.0
(22) Anmeldetag: 10.03.1998
(51) Int. Cl.: D06F 37/20, F16F 7/08

(54) **Reibungsdämpfer, insbesondere für Waschmaschinen mit Schleudergang**

(71) Anmelder: SUSPA COMPART Aktiengesellschaft, 90518 Altdorf (DE)
(72) Erfinder: Bauer, Hans-Peter, 90518 Altdorf (DE); Ehrnsberger, Manfred, 92348 Berg (DE); Rössner, Reiner, 90518 Altdorf (DE)
(74) Vertreter: Rau, Manfred, Dr. Dipl.-Ing.

(57) **Zusammenfassung**

Ein Reibungsdämpfer, insbesondere für Waschmaschinen mit Schleudergang, weist ein rohrförmiges Gehäuse (12) und einen in dem Gehäuse (12) vorschiebbar geführten Stößel (18) auf, wobei am freien Ende des Gehäuses (12) beziehungsweise des Stößels (18) Anlenkelemente (15, 19) angebracht sind. Am stößelaustrittsseitigen Ende (29) des Gehäuses (12) ist ein Dämpfungsgehäuse (30) ausgebildet, in dem ein Reibbelag (39) angeordnet ist. Das Dämpfungsgehäuse (30) ist mittels eines Spannelements (36) radial zur Einstellung der Vorspannung des Reibbelages (35) verformbar.

## Beschreibung

Die Erfindung betrifft einen Reibungsdämpfer nach dem Oberbegriff des Anspruches 1.

Aus dem ES-Gbm 285 746 ist ein Reibungsdämpfer der gattungsgemäßen Art bekannt, bei dem das rohrförmige Gehäuse im Bereich seines stößelaustrittsseitigen Endes einen erweiterten Aufnahmeabschnitt aufweist, der zum stößelseitigen Ende hin wiederum geschlossen ist. In diesen ringnutartigen Abschnitt wird ein Reibbelag in Form eines Streifens aus geschäumtem Kunststoff eingelegt. Der Stößel ist an der gesamten Innenwand des rohrförmigen Gehäuses geführt. Dieser Reibungsdämpfer ist sehr einfach in seinem Aufbau; durch die Art der Führung in Verbindung mit der Art der Anordnung des Dämpfungsbelages sind keine definierten Reibungsverhältnisse erreichbar. Darüber hinaus treten während des Betriebes Pfeifgeräusche auf.

Aus der EP 0 336 176 B1 ist es bekannt, den vorgenannten Reibungsdämpfer in der Weise weiterzubilden, daß der Reibbelag in einem gesonderten Dämpfungsgehäuse angeordnet ist, daß von dem stößelaustrittsseitigen Ende her in das ringförmige Gehäuse eingeschoben und dort axial in Richtung seiner Längsachse festgelegt ist. Hierdurch wird der in ein gesondertes Dämpfungsgehäuse eingelegte beziehungsweise in diesem gehaltene Reibbelag zu einer gesonderten Baugruppe gemacht, die jeweils zur Erzeugung unterschiedlicher Reibungsverhältnisse unterschiedlich ausgebildet sein kann, aber in einen ansonsten identischen Reibungsdämpfer einsetzbar ist.

Aus der DE 28 12 904 C2 ist ein Reibungsdämpfer bekannt, dessen Gehäuse aus zwei Halbschalen besteht, die mittels eines Federelementes zusammengehalten werden. Zweck dieser Maßnahme ist es, eine gute Wärmeabfuhr und damit konstante Reibungsverhältnisse zu erreichen.

Aus der DE 44 27 336 A1 ist ein Reibungsdämpfer bekannt, dessen Gehäuse zwei Gehäuseteile aufweist, die jeweils eine Reibfläche bilden, wobei der Abstand dieser Gehäuseteile und damit der Abstand der Reibflächen beim Verbinden der Gehäuseteile entsprechend der gewünschten Reibung eingestellt wird. Damit soll der Reibungsdämpfer so ausgebildet werden, daß die Reibungskräfte toleranzarm sind.

Der Erfindung liegt die Aufgabe zugrunde, einen Reibungsdämpfer der gattungsgemäßen Art so auszugestalten, daß in einfacher Weise die Reibkraft zwischen Reibbelag und Stößel einstellbar ist.

Diese Aufgabe wird erfindungsgemäß durch die Merkmale im Kennzeichnungsteil des Anspruches 1 gelöst. Durch die radiale Verformung des Dämpfungsgehäuses wird die Reibkraft zwischen Reibbelag und Stößel exakt eingestellt, wodurch Toleranzen in den Reibungskräften minimiert werden. Dadurch werden insbesondere unerwünschte Maxima in den Reibungskräften ausgeschaltet, was zu einer Reduktion der Erwärmung des Reibungsdämpfers führt. Dies ist insbesondere bei großen Unwuchten in Waschmaschinen von Bedeutung. Durch die Maßnahmen wird daher die Lebensdauer der Reibungsdämpfer erhöht. Die erfindungsgemäßen Reibungsdämpfer werden bevorzugt in Waschmaschinen eingesetzt. Hierbei ist es ein Problem, wenn in eine Waschmaschine zwei Reibungsdämpfer eingebaut werden, deren Reibungswerte an der oberen beziehungsweise unteren Toleranzgrenze liegen. Wenn durch die erfindungsgemäßen Maßnahmen die Toleranzen reduziert werden, dann wird bei den Waschmaschinen die Streuung im Schwingverhalten wesentlich geringer als bisher üblich. Hieraus ergeben sich wiederum Vorteile bei der kostenmäßigen Optimierung der Waschmaschinen, und zwar insbesondere bei der Auslegung von dynamisch stark beanspruchten Teilen des Schwingungssystems von Waschmaschinen.

Nach der Einstellung der Reibkraft durch entsprechende Einstellung des Spannelementes kann dieses in der gewünschten Position mit dem Dämpfungsgehäuse verschweißt werden. Es kann aber auch entsprechend den vorteilhaften Ausgestaltungen nach den Unteransprüchen 2 bis 9 gehandhabt werden. Der erfindungsgemäße Reibungsdämpfer kann nach Anspruch 10 auch als Federbein ausgebildet und entsprechend eingesetzt werden.

Weitere Merkmale, Vorteile und Einzelheiten der Erfindung ergeben sich aus der nachfolgenden Beschreibung von Ausführungsbeispielen anhand der Zeichnung. Es zeigt
- Fig. 1: eine Trommelwaschmaschine in schematischer Darstellung in Seitenansicht,
- Fig. 2: die Trommelwaschmaschine gemäß Fig. 1 in Vorderansicht,
- Fig. 3: einen Reibungsdämpfer im Längsschnitt,
- Fig. 4: einen Querschnitt durch den Reibungsdämpfer gemäß der Schnittlinie IV-IV in Fig. 3,
- Fig. 5: einen Teil-Längsschnitt durch den Reibungsdämpfer mit maximal vorgespanntem Reibbelag,
- Fig. 6: einen Querschnitt durch den Reibungsdämpfer gemäß der Schnittlinie VI-VI in Fig. 5,
- Fig. 7: einen Teilausschnitt aus Fig. 5 in stark vergrößertem Maßstab,
- Fig. 8: eine Darstellung entsprechend Fig. 7 in leicht abgewandelter Ausgestaltung,
- Fig. 9: einen Teil-Längsschnitt durch eine gegenüber Fig. 3 abgewandelte Ausführungsform eines Reibungsdämpfers,
- Fig. 10: einen Querschnitt durch den Reibungsdämpfer gemäß der Schnittlinie X-X in Fig. 9,
- Fig. 11: einen Teil-Längsschnitt durch den Reibungsdämpfer nach Fig. 9 mit maximal verspanntem Reibbelag,
- Fig. 12: eine Einzelheit aus Fig. 10 in stark vergrößertem Maßstab,
- Fig. 13: einen als Federbein ausgebildeten Reibungsdämpfer im Längsschnitt in einer ansonsten mit Fig. 3 weitgehend übereinstimmenden Ausgestaltung,
- Fig. 14: einen als Federbein ausgestalteten Reibungsdämpfer im Teil-Längsschnitt in einer ansonsten mit Fig. 9 übereinstimmenden Ausgestaltung,
- Fig. 15: einen Teil-Längsschnitt durch eine gegenüber Fig. 5 abgewandelte Ausführungsform eines Reibungsdämpfers,
- Fig. 16: eine Trommelwaschmaschine in schematischer Darstellung in Seitenansicht mit Federbein-Reibungsdämpfern nach Fig. 13 beziehungsweise 14 und
- Fig. 17: die Trommelwaschmaschine gemäß Fig. 16 in Vorderansicht.

Eine Trommelwaschmaschine mit waagrechter Trommelachse 1 weist ein schwingungsfähiges Waschaggregat 2 mit einem Antriebsmotor 3 auf, der die nicht im einzelnen dargestellte Waschtrommel über einen Riementrieb 4 antreibt. Weitere mit dem Waschaggregat 2 verbundene Bestandteile, beispielsweise ein Getriebe, sind der Einfachheit halber nicht dargestellt. Das schwingungsfähige Waschaggregat 2 ist an einem auf einem durch einen Grundrahmen gebildeten Maschinengestell 5 abgestützten Waschmaschinen-Gehäuse 6 mittels Schrauben-Zugfedern 7 aufgehängt. Die Zugfedern 7 sind einerseits an Ösen 8 angebracht, die im oberen Bereich des Waschaggregates 2 angebracht sind. Andererseits sind sie an Ösen 9 aufgehängt, die an Seitenwänden 10 des Gehäuses 6 ausgebildet sind. Anstelle einer derartigen Aufhängung des Waschaggregates 2 an Zugfedern 7 kann auch eine bekannte Abstützung des Waschaggregates 2 über sogenannte Federbeine auf dem Maschinengestell 5 vorgesehen sein, wie sie aus der EP 0 108 217 B1 (entsprechend US-PS 4 991 412) bekannt sind. Entscheidend ist, daß das Waschaggregat 2 frei schwingungsfähig aufgehängt beziehungsweise abgestützt ist.

Zwischen dem Waschaggregat 2 und dem Maschinengestell 5 sind weiterhin Reibungsdämpfer angeordnet, bei denen es sich um Reibungsdämpfer 11 handelt.

Bei dem nachfolgend geschilderten Ausführungsbeispiel weist der Reibungsdämpfer 11 ein Gehäuse 12 auf Das Gehäuse 12 besteht im wesentlichen aus einem zylindrischen Rohr 13, das an einem Ende mittels eines Bodens 14 verschlossen ist. An der Außenseite des Bodens 14 ist eine Gelenkbüchse 15 als Anlenkelement angebracht, mittels derer der Reibungsdämpfer 11 an einem Lager 16 am Waschaggregat 2 so angebracht wird, daß der Reibungsdämpfer 11 um eine Schwenkachse 17 relativ zum Waschaggregat 2 schwenkbar angebracht ist, die parallel zur Trommelachse 1 verläuft.

Der jeweilige Reibungsdämpfer 11 weist weiterhin einen Stößel 18 auf, der an seinem äußeren Ende ebenfalls eine Gelenkbüchse 19 aufweist, deren Schwenkachse 20 gleichermaßen wie die Schwenkachse 17 die Mittel-Längs-Achse 21 des jeweiligen Reibungsdämpfers 11 senkrecht schneidet. Mit dieser Gelenkbüchse 19 wird der Reibungsdämpfer 11 in einem am Maschinengestell 5 angebrachten Lager 22 in der Weise schwenkbar gelagert, daß die Schwenkachse 20 ebenfalls parallel zur Trommelachse 1 verläuft.

Der Stößel 18 besteht im wesentlichen aus einem relativ dünnwandigen Metall-Rohr 23, das an seinem außerhalb des Gehäuses 12 befindlichen Ende die Gelenkbüchse 19 trägt, an der ein Deckel 24 ausgebildet ist, mit dem diese Gelenkbüchse 19 mittels einer Sicke 25 am Rohr 23 mit letzterem verbunden ist. Demgegenüber ist das Gehäuse 12 einstückig aus Kunststoff gespritzt.

Das Gehäuse 12 weist an seiner Innenwand 26 radial nach innen vorspringende und parallel zur Achse 21 verlaufende Führungsstege 27 auf, die sich im wesentlichen über die Länge der Innenwand 26 erstrecken. Diese Führungsstege 27 sind in gleichen Winkelabschnitten zueinander angeordnet, und es handelt sich um mindestens drei Führungsstege; im Ausführungsbeispiel sind vier im Abstand von 90° zueinander angeordnete Führungsstege 27 vorgesehen. Um das Einführen des Stößels 18 in das Gehäuse 12 zu erleichtern, ist das Rohr 23 an seinem der Gelenkbüchse 19 entgegengesetzten Ende mit einer radialen Einschnürung 28 versehen.

An dem der Gelenkbüchse 15 entgegengesetzten stößelaustrittsseitigen Ende 29 weist das Gehäuse 12 ein Dämpfungsgehäuse 30 auf. Dieses Dämpfungsgehäuse 30 ist kegelstumpfförmig ausgebildet und besteht aus mehreren, im vorliegenden Fall sechs Gehäuseabschnitten 31, die über einen Ringbund 32 mit dem Rohr 13 verbunden und einstückig mit diesem ausgebildet sind. Die Gehäuseabschnitte 31 werden voneinander durch parallel zur Achse 21 verlaufende, in gleichem Winkelabstand zueinander angeordnete Längsschlitze 33 getrennt. Am freien Ende des Rohres 13 befinden sich an den Gehäuseabschnitten 31 nach innen zum Stößel 18 hin vorragende Anschlag-Ränder 34.

Im Dämpfungsgehäuse 30 ist ein Reibbelag 35 angeordnet, der beispielsweise aus einem Polyurethan-Schaumstoff besteht, in dessen offenen oder geöffneten Zellen Schmierfett untergebracht ist. Der Reibbelag 35 wird durch die Anschlag-Ränder 34 einerseits, und den Ringbund 32 andererseits gegen ein Herausrutschen aus dem Dämpfungsgehäuse 30 in Richtung der Achse 21 gehindert. Der Reibbelag 35 liegt reibend an dem Rohr 23 des Stößels 18 an.

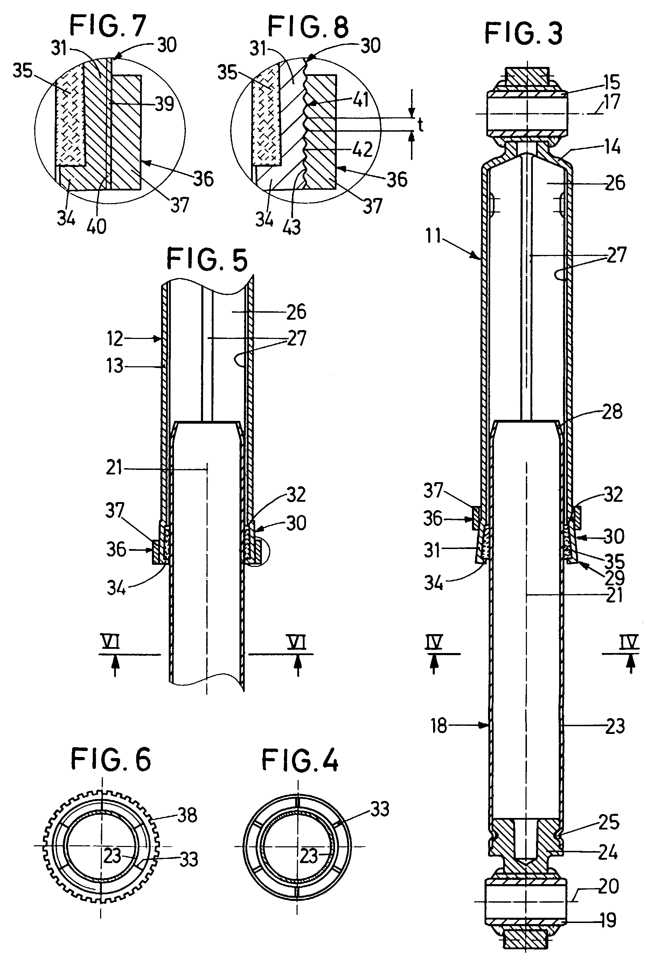

Auf der Außenseite des Dämpfungsgehäuses 30 ist ein Spannelement 36 angeordnet, bei dem es sich bei dem Ausführungsbeispiel nach den Figuren 3 bis 7 um einen Spannring 37 handelt, der auf seiner Außenseite mit einer Rändelung 38 versehen ist. Auf seiner Innenseite weist er ein Innengewinde 39 auf, das mit einem Außengewinde 40 auf dem Dämpfungsgehäuse 30, also auf den Gehäuseabschnitten 31, zusammenwirkt. In unverspanntem Zustand des Dämpfungsgehäuses 30 mit dem Reibbelag 35 befindet sich der Spannring 37 im Bereich des Ringbundes 32, wo das Dämpfungsgehäuse 30 seinen kleinsten Außendurchmesser aufweist, wo also die geringstmögliche Reibungskraft gegeben ist. Von hier aus erweitert es sich in unverspanntem Zustand zum freien Ende des Rohres 13 hin. Wenn der Spannring 37 auf das Dämpfungsgehäuse 30 in Richtung zu dessen freiem Ende hin geschraubt wird, dann werden hierbei die Gehäuseabschnitte 31 in Richtung zum Rohr 23 des Stößels 18 hin gebogen, wie aus Fig. 5 ersichtlich ist. Hierbei wird der Reibbelag 35 mit zunehmender Kraft gegen das Rohr 23 gedrückt, wodurch die Reibkraft zwischen dem Reibbelag 35 und damit dem Gehäuse 12 einerseits, und dem Stößel 18 andererseits zunimmt. Bei diesem Vorspannen werden die Längsschlitze 33 zunehmend verengt, wie sich aus dem Vergleich der Figuren 4 und 6 ergibt. In der in den Figuren 5 und 7 dargestellten Endposition des Spannrings 37 im Bereich der Anschlagränder 34, also im Bereich höchstmöglicher Vorspannung des Reibbelages 35, hat das Dämpfungsgehäuse 30 eine im wesentlichen zylindrische Form, wie sich aus den Figuren 5 und 7 ergibt. Hier hat der Reibungsdämpfer seine höchstmögliche Reibungskraft.

Das Ausführungsbeispiel nach Fig. 8 unterscheidet sich von dem nach den Figuren 3 bis 7 nur dadurch, daß der Spannring 37 und entsprechend das Dämpfungsgehäuse 30 mit den Gehäuseabschnitten 31 nicht mit einem Innengewinde beziehungsweise einem Außengewinde versehen sind. Es ist vielmehr ein im Querschnitt wellenförmige beziehungsweise zahnförmige Verrastung 41 vorgesehen, bei der Rastringe 42 an der Innenseite des Spannrings 37 in hierzu komplementäre Rastringe 43 an der Außenseite der Gehäuseabschnitte 31 eingreifen. Zum Vorspannen des Reibbelages wird der Spannring 37 daher ohne Drehung in Richtung der Achse 21 verschoben und zwar in kleinen Schritten, die der Teilung t der Verrastung 41 entsprechen. Diese entspricht dem Abstand zweier benachbarter Rastringe 42 beziehungsweise zwei benachbarter Rastringe 43.

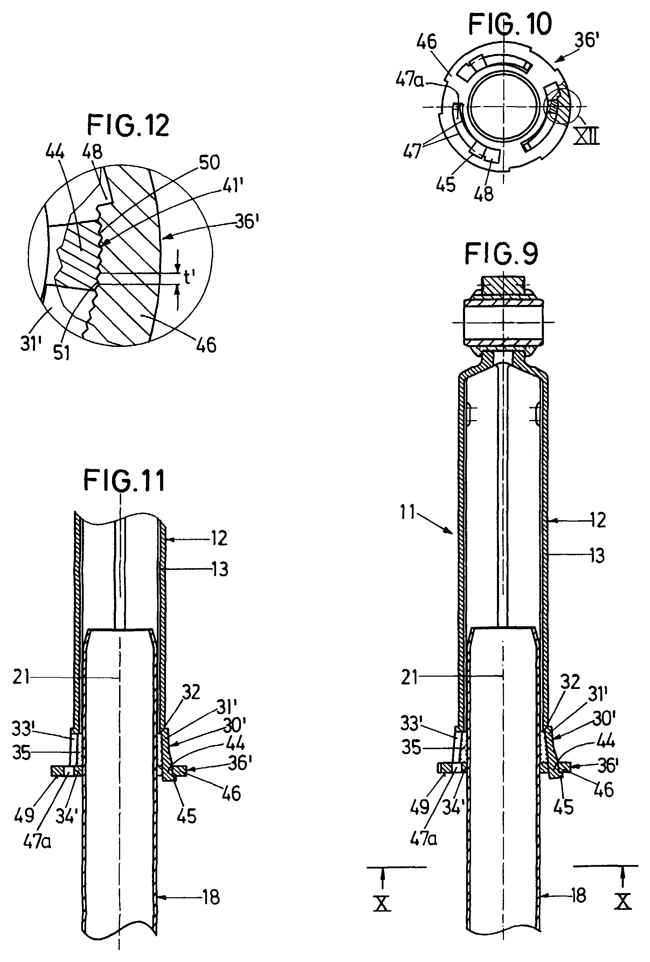

Das Ausführungsbeispiel nach den Figuren 9 bis 12 unterscheidet sich von den zuvor Beschriebenen durch die Ausgestaltung des Dämpfungsgehäuses 30' und des Spannelementes 36'. Das Dämpfungsgehäuse 30' weist wiederum mehrere, im vorliegenden Fall drei Gehäuseabschnitte 31' auf, die über einen Ringbund 32 einstückig mit dem Rohr 13 des Gehäuses 12 verbunden und einstückig mit diesem ausgebildet sind. Sie sind durch Längsschlitze 33' voneinander getrennt. Das Dämpfungsgehäuse 30' öffnet sich zum freien Ende des Rohres 13 hin kegelstumpfförmig. An dem freien Ende des Rohres 13 sind an den Gehäuseabschnitten 31' sich etwa parallel zur Achse 21 erstreckende Spann-Vorsprünge 44 ausgebildet, die jeweils einen radial zur Achse 21 nach außen vorspringenden Arretier-Rand 45 aufweisen. Auf die Spann-Vorsprünge 44 ist ein Spannring 46 aufgesetzt, der als Spann-Kurven 47 dienende Ausschnitte 47a aufweist, die sich etwa in Umfangsrichtung leicht zur Achse 21 hin erstrecken, wie aus Fig. 10 hervorgeht. Sie weisen jeweils an ihrem Anfang eine vergrößerte Montageöffnung 48 auf, durch die die Spann-Vorsprünge 44 mit Arretier-Rand 45 beim Aufstecken des Spannrings 46 auf die Spann-Vorsprünge 44 hindurch geschoben werden. Anschließend wird der Spannring 46 geringfügig um die Achse 21 gedreht, so daß die Arretier-Ränder 45 zur Anlage gegen die zugewandte Stirnseite 49 des Spannrings 46 kommt, wodurch ein Herabfallen des Spannrings 46 von dem Dämpfungsgehäuse 30' vermieden wird. Die Spann-Vorsprünge 44 füllen den Ausschnitt 47a zwischen den Spann-Kurven 47 angenähert spielfrei aus, wie den Figuren 9 bis 11 entnehmbar ist. Die Spann-Kurven 47 nähern sich von der Montageöffnung 48 an der Achse 21, so daß bei einem Verdrehen des Spannrings 46 - in Fig. 10 entgegen dem Uhrzeigersinn - die Spann-Vorsprünge 44 und damit die mit diesem einstückig ausgebildeten Gehäuseabschnitte 31' in Richtung zur Achse 21 hin verformt werden. Die Endstellung ist Fig. 12 entnehmbar. Bei diesem Ausführungsbeispiel ist ein Anschlag-Rand 34' für den Reibbelag 35 am Spannring 46 ausgebildet. Wie aus Fig. 12 hervorgeht, ist zwischen den Spann-Kurven 47 und den Spann-Vorsprüngen 44 eine Verrasterung 41' ausgebildet, die in diesem Fall durch im Querschnitt ebenfalls wellenförmige, parallel zur Achse 21 verlaufende Raststege 50 am Spannring 46 und hierzu komplementäre Raststege 51 am jeweiligen Spann-Vorsprung 44 gebildet wird. Der Spannring 46 kann also in kleinen Schritten entsprechend der Teilung t' der Raststege 50 beziehungsweise 51 verdreht werden.

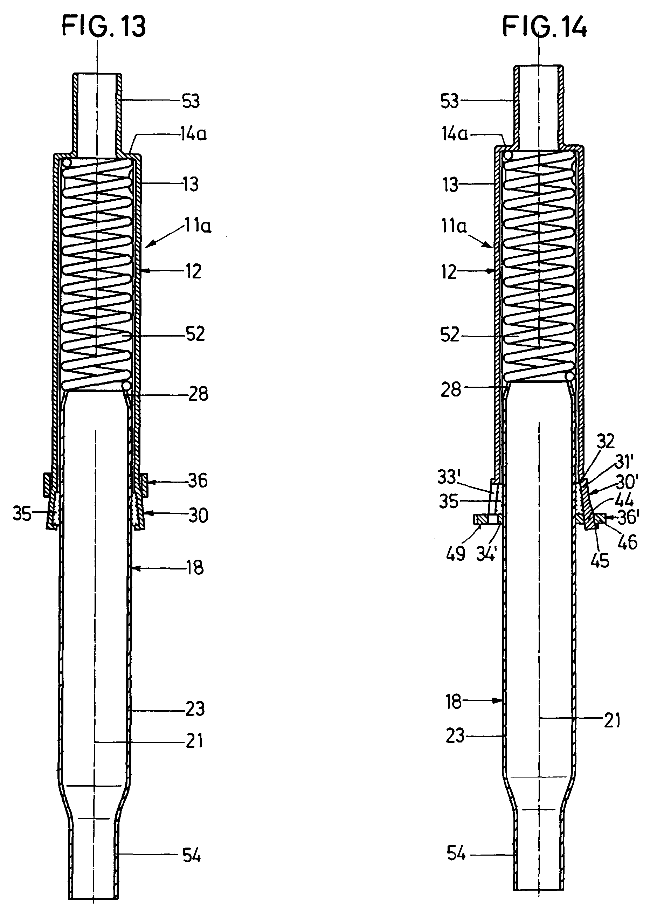

Das Ausführungsbeispiel nach Fig. 13 unterscheidet sich von dem nach den Figuren 3 bis 7 und 8 nur dadurch, daß der Reibungsdämpfer 11a zusätzlich als Federbein ausgebildet ist. Im Gehäuse 12 ist eine Schraubenfeder 52 angeordnet, die sich einerseits am Boden 14a des zylindrischen Rohres 13, und andererseits am freien Ende des Stößels 18 im Bereich seiner Einschnürung 28 abstützt. Das Gehäuse 12 weist ein Anlenkelement in Form eines rohrförmigen Steckzapfens 53 auf. Entsprechendes gilt für den Stößel 18, aus dessen Rohr 23 im Bereich seines äußeren freien Endes ein Steckzapfen 54 als Anlenkelement ausgeformt ist. Das Dämpfungsgehäuse 30 mit Spannelement 36 ist wie beim Ausführungsbeispiel nach den Figuren 3 bis 7 beziehungsweise 8 ausgebildet. Auch die sonstige Ausgestaltung stimmt mit der nach den Figuren 3 bis 7 überein, so daß es keiner erneuten Beschreibung bedarf. Die Detaildarstellungen gemäß den Figuren 4 bis 8 gelten auch hierfür.

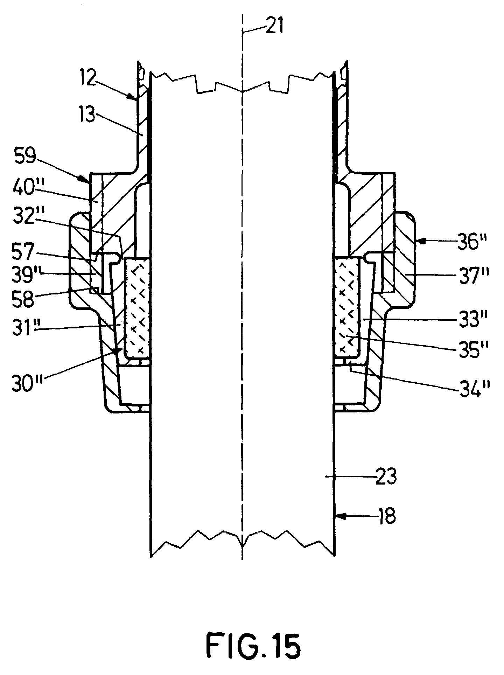

Das Ausführungsbeispiel nach Fig. 14 entspricht demnach Fig. 12, wobei das Dämpfungsgehäuse 30' mit Spannelement 36' der Ausgestaltung nach den Figuren 9 bis 12 entspricht. Die entsprechenden Bezugszeichen in der Zeichnung weisen insofern auf die vorherige Beschreibung hin. Die Detaildarstellungen in den Figuren 10 bis 12 gelten auch hierfür.

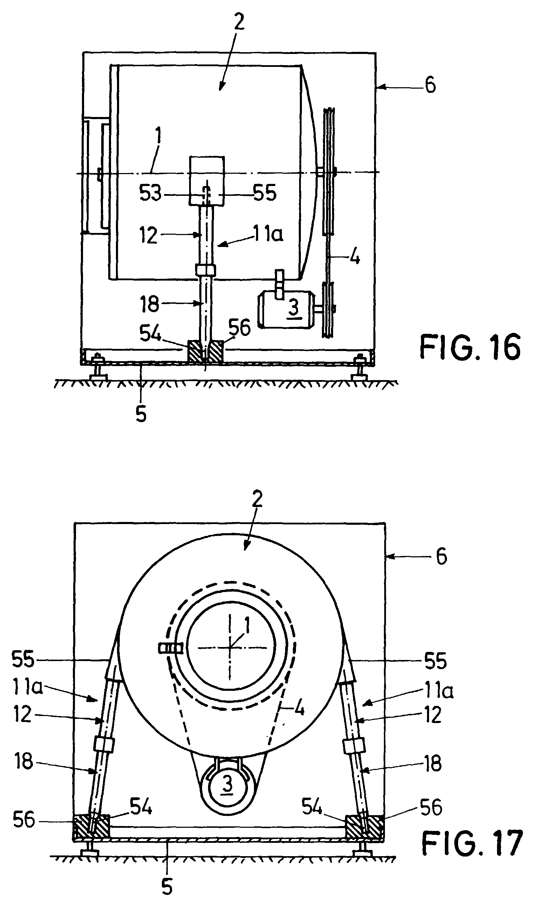

Als Federbein ausgebildete Reibungsdampfer 11a entsprechend den Figuren 13 und 14 dienen zur Abstützung eines Waschaggregates 2, wie es in den Figuren 15 und 16 dargestellt ist. Hierbei ist also das Waschaggregat 2 nicht mehr durch Schrauben-Zugfedern am Waschmaschinen-Gehäuse 6 aufgehängt. Die als Federbein dienenden Reibungsdämpfer 11a sind mit ihren Steckzapfen 53 in elastischen Elementen 55, beispielsweise Klötzen aus Gummi oder anderen Elastomeren, aufgenommen, die wiederum am Waschaggregat 2 befestigt sind. Die Steckzapfen 54 sind in entsprechenden elastischen Elementen 56 aufgenommen, die mit dem Maschinengestell 5 verbunden sind. Diese elastische Anlenkung der als Federbeine ausgebildeten Reibungsdämpfer 11a am Waschaggregat 2 einerseits, und am Maschinengestell 5 andererseits ist in der Praxis allgemein bekannt, und zwar beispielsweise aus der oben bereits erwähnten EP 0 108 217 B1 (entsprechend US-PS 4 991 412).

Das Ausführungsbeispiel nach Fig. 15 unterscheidet sich von den zuvor beschriebenen durch die Ausgestaltung des Dämpfungsgehäuses 30'' und des Spannelements 36'' und dem Vorsehen eines zusätzlichen Befestigungsabschnitts 59. Im folgenden werden Teile, die gegenüber denen der Ausführungsform gemäß Fig. 3 bis 7 gleich sind, mit denselben Bezugszeichen versehen. Andere, jedoch funktionell gleiche Teile werden durch Bezugszeichen mit einem zweifachen Strich bezeichnet. Ansonsten wird auf die detaillierte Beschreibung zum Ausführungsbeispiel gemäß Fig. 3 bis 7 verwiesen. Lediglich die Unterschiede werden beschrieben.

Das Dämpfungsgehäuse 30'' weist wiederum mehrere Gehäuseabschnitte 31'' auf, die über einen Ringbund 32'' einstückig mit dem Befestigungsabschnitt 59 verbunden und einstückig mit diesem ausgebildet sind. Der Befestigungsabschnitt 59 ist einstückig mit dem Rohr 13 des Gehäuses 12 verbunden. Die Gehäuseabschnitte 31'' sind durch Längsschlitze 33'' voneinander getrennt. Das Dämpfungsgehäuse 30'' verjüngt sich hinsichtlich seines Außendurchmessers zum freien Ende des Rohres 13 hin kegelstumpfförmig.

Im Dämpfungsgehäuse 30'' ist ein Reibbelag 35'' angeordnet. Dieser wird durch die am freien Ende des Rohres 13 befindlichen, nach innen zum Stößel 18 hin vorragenden Anschlag-Ränder 34'' einerseits, und den Ringbund 32'' andererseits gegen ein Herausrutschen aus dem Dämpfungsgehäuse 30'' in Richtung der Achse 21 gehindert. Der Reibbelag 35'' liegt reibend an dem Rohr 23 des Stößels 18 an.

Auf der Außenseite des Dämpfungsgehäuses 30'' ist ein Spannelement 36'' angeordnet, bei dem es sich bei dem Ausführungsbeispiel nach Fig. 15 um einen Spannring 37'' handelt. Auf seiner Innenseite weist er ein Innengewinde 39'' auf, das mit einem Außengewinde 40'' auf dem Befestigungsabschnitt 59 zusammenwirkt. In unverspanntem Zustand des Dämpfungsgehäuses 30'' mit dem Reibbelag 35'' befindet sich der Spannring 37'' am freien Ende des Rohres 13, wo das Dämpfungsgehäuse 30'' seinen kleinsten Außendurchmesser aufweist, wo also die geringstmögliche Reibungskraft gegeben ist. Das Dämpfungsgehäuse 30'' erweitert sich vom freien Ende des Rohres 13 zum Ringbund 32'' hin. Wenn der Spannring 37'' auf das Dämpfungsgehäuse 30'' in Richtung zum verschlossenen Ende des Rohres 13 hin geschraubt wird, dann werden hierbei die Gehäuseabschnitte 31'' in Richtung zum Rohr 23 des Stößels 18 hin gebogen. Hierbei wird der Reibbelag 35'' mit zunehmender Kraft gegen das Rohr 23 gedrückt, wodurch die Reibkraft zwischen dem Reibbelag 35'' und damit dem Gehäuse 12 einerseits, und dem Stößel andererseits zunimmt.

Am in Richtung des freien Endes des Rohres 13 weisenden Ende des Außengewindes 40'' ist ein Gewinde-Anschlag-Rand 57 vorgesehen. Auf der Innenseite des Spannrings 37'' ist eine Gewinde-Anschlag-Kante 58 vorgesehen, die am innenseitigen Ende des Innengewindes 39'' im wesentlichen radial zur Mittel-Längs-Achse 21 verläuft. Der oben beschriebene Vorgang des Aufschraubens des Spannrings 37'' in Richtung des verschlossenen Endes des Rohres 13 ist spätestens dann beendet, wenn die Gewinde-Anschlag-Kante 58 an den Gewinde-Anschlag-Rand 57 stößt.

Vorteilhaft bei dieser Ausführungsform ist, daß der Spannring 37'' bei der Montage von der Seite des offenen Endes des Gehäuses 12 aufgesetzt werden kann. Deshalb kann, anders als bei der Ausführungsform gemäß Fig. 3 bis 7, die Gelenkhülse 15 einen Durchmesser aufweisen, der größer ist als der des Gehäuses 12, da der Spannring 37'' nicht von der Seite des geschlossenen Endes des Gehäuses 12 aufgeschoben werden muß.

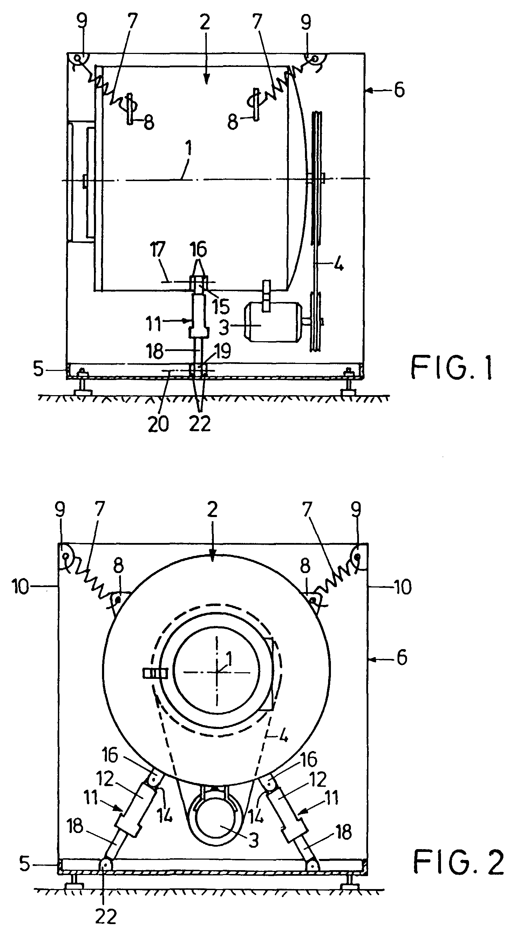

Im übrigen gilt die Beschreibung für die in den Figuren 1 und 2 dargestellte Trommelwaschmaschine auch für die in den Figuren 16 und 17 dargestellte Trommelwaschmaschine.

## Patentansprüche

1. Reibungsdämpfer, insbesondere für Waschmaschinen mit Schleudergang, mit einem rohrförmigen Gehäuse (12; 12a), mit einer Mittel-Längs-Achse (21),
mit einem in dem Gehäuse (12) in Richtung der Achse (21) verschiebbar geführten und aus einem Ende desselben herausragenden Stößel (18), mit jeweils am freien Ende des Gehäuses (12; 12a) beziehungsweise des Stößels (18) angebrachten Anlenkelementen (15, 19; 53, 54), und
mit einem am stößelaustrittsseitigen Ende (29) des Gehäuses (12) ausgebildeten Dämpfungsgehäuses (30; 30'; 30''), in dem ein am Stößel (18) reibend anliegender Reibbelag (35; 35'') angeordnet ist,
**dadurch gekennzeichnet, daß** das Dämpfungsgehäuse (30; 30'; 30'') radial zur Achse (21) verformbar ist, und
**daß** am Dämpfungsgehäuse (30; 30'; 30'') ein Spannelement (36; 36'; 36'') zum radialen Zusammenpressen des Dämpfungsgehäuses (30; 30'; 30'') vorgesehen ist.

2. Reibungsdämpfer nach Anspruch 1, **dadurch gekennzeichnet, daß** das Dämpfungsgehäuse durch Längsschlitze (33; 33'; 33'') voneinander getrennte Gehäuseabschnitte (31; 31'; 31'') aufweist.

3. Reibungsdämpfer nach Anspruch 1 oder 2, **dadurch gekennzeichnet, daß** das Dämpfungsgehäuse (30; 30'; 30'') in unverspanntem Zustand etwa kegelstumpfförmig ist.

4. Reibungsdämpfer nach einem der Ansprüche 1 bis 3, **dadurch gekennzeichnet, daß** das Spannelement (36; 36'; 36'') im wesentlichen durch einen Spannring (37; 46; 37'') gebildet wird.

5. Reibungsdämpfer nach Anspruch 4, **dadurch gekennzeichnet, daß** der Spannring (37; 37'') in Richtung der Achse (21) bewegbar auf dem Dämpfungsgehäuse (30; 30'') angeordnet ist.

6. Reibungsdämpfer nach Anspruch 5, **dadurch gekennzeichnet, daß** der Spannring (37; 37'') ein Innengewinde (39; 39'') aufweist, das in ein am Dämpfungsgehäuse (30; 30'') ausgebildetes Außengewinde (40; 40'') eingreift.

7. Reibungsdämpfer nach einem der Ansprüche 1 bis 5, **dadurch gekennzeichnet, daß** der Spannring (37) und das Dämpfungsgehäuse (30) mit einer Verrastung (41) versehen sind.

8. Reibungsdämpfer nach einem der Ansprüche 1 bis 4**, dadurch gekennzeichnet, daß** der Spannring (46) mit sich über einen Teil-Umfang erstreckenden Spann-Kurven (47) versehen ist, an denen am Dämpfungsgehäuse (30') ausgebildete Spann-Vorsprünge (44) anliegen.

9. Reibungsdämpfer nach Anspruch 8, **dadurch gekennzeichnet, daß** zwischen den Spann-Kurven (47) und den Spann-Vorsprüngen (44) eine Verrastung (41') vorgesehen ist.

10. Reibungsdämpfer nach einem der Ansprüche 1 bis 9, **dadurch gekennzeichnet, daß** zwischen dem Gehäuse (12a) und dem Stößel (18) eine Schraubenfeder (52) vorgesehen ist.

11. Reibungsdämpfer nach Anspruch 4, **dadurch gekennzeichnet, daß** der Spannring (37; 37'') mit dem Dämpfungsgehäuse (30; 30'') formschlüssig verbindbar ist.
